# EUROPEAN PATENT APPLICATION

(11) **EP 4 050 548 A1**
(43) Date of publication of application: **31.08.2022**
(21) Application number: 20879185.5
(22) Date of filing: 22.10.2020
(51) Int. Cl.: G06Q 30/08, G06Q 50/06

(54) **TRANSACTION ASSISTANCE SYSTEM AND TRANSACTION ASSISTANCE METHOD**

(30) Priority: 25.10.2019 JP 2019194579
(71) Applicant: Kyocera Corporation, Kyoto-shi Kyoto 612-8501 (JP)
(72) Inventor: FURUKAWA, Takashi, Kyoto-shi, Kyoto 612-8501 (JP); OKINO, Kenta, Kyoto-shi, Kyoto 612-8501 (JP)
(74) Representative: TBK
(86) International application number: PCT/JP2020/039799
(87) International publication number: WO 2021/079957

(57) **Abstract**

A transaction assistance system for assisting a predetermined transaction at a transaction target time includes a controller for determining, from among two or more facilities, a candidate for a transaction facility performing a transaction in a predetermined transaction market, a transmitter transmitting, to a management server belonging to a management entity managing the two or more facilities, transaction facility information specifying the candidate for the transaction facility, and a receiver receiving, from the management server, transaction established facility information specifying a transaction established facility in which the predetermined transaction is established in the predetermined transaction market. The transmitter transmits, to a verification server belonging to a verification entity verifying a result of the predetermined transaction, transaction established facility information specifying the transaction established facility.

## Description

### Technical Field

The present disclosure relates to a transaction assistance system and a transaction assistance method.

### Background Art

In recent years, a mechanism such as a virtual power plant (VPP) in which an output power of a distributed power supply provided in each facility is used in a power grid has attracted attention. In such a mechanism, a method of establishing a power trade transaction in a power transaction market is also known. For example, there is known a technique in which information such as a power generation form of the distributed power supply, a power generation reserve capacity, and a carbon dioxide emission amount is presented from a seller to a buyer together with bid information on a price for selling power (for example, Patent Document 1).

Incidentally, a case is assumed in which equipment (for example, the distributed power supply) provided in the facility is managed by a management entity represented by an aggregator. Further, a case is assumed in which bidding for the power transaction market is performed for each management entity rather than for each facility.

In such a case, since the bidding for the power transaction market is performed for each management entity, a verification entity verifying a power transaction cannot recognize a facility entity that is a subject for adjusting a power of the power grid.

### Citation List

### Patent Literature

Patent Document 1: JP 2006-39956 A

### Summary

A transaction assistance system according to a first aspect is a system for assisting a predetermined transaction at a transaction target time. The transaction assistance system includes a controller for determining, from among two or more facilities, a candidate for a transaction facility performing a transaction in a predetermined transaction market, a transmitter transmitting, to a management server belonging to a management entity managing the two or more facilities, transaction facility information specifying the candidate for the transaction facility, and a receiver receiving, from the management server, transaction established facility information specifying a transaction established facility in which the predetermined transaction is established in the predetermined transaction market. The transmitter transmits, to a verification server belonging to a verification entity verifying a result of the predetermined transaction, transaction established facility information specifying the transaction established facility.

A transaction assistance method according to a second aspect is a method of performing a predetermined transaction at a transaction target time. The transaction assistance method includes determining, from among two or more facilities, a candidate for a transaction facility performing s transaction in a predetermined transaction market, transmitting, to a management server belonging to s management entity managing the two or more facilities, transaction facility information specifying s candidate for the transaction facility, and receiving, from the management server, transaction established facility information specifying a transaction established facility in which the predetermined transaction is established in the predetermined transaction market, and transmitting, to a verification server belonging to a verification entity verifying a result of the predetermined transaction, the transaction established facility information specifying the transaction established facility.

### Brief Description of Drawings

FIG. 1 is a diagram illustrating a bid assistance system 100 according to an embodiment.
FIG. 2 is a diagram illustrating a facility 300 according to the embodiment.
FIG. 3 is a diagram illustrating a power management server 200 according to the embodiment.
FIG. 4 is a diagram illustrating a local controller 360 according to the embodiment.
FIG. 5 is a diagram illustrating a bid assistance server 500 according to the embodiment.
FIG. 6 is a diagram illustrating information managed by a management unit 510 according to the embodiment.
FIG. 7 is a diagram illustrating a method of determining a candidate for a bid facility according to the embodiment.
FIG. 8 is a diagram illustrating a bid assistance method according to the embodiment.

### Description of Embodiments

Embodiments will be described below with reference to the drawings. Note that in the following description of the drawings, the same or similar components will be denoted by the same or similar reference signs. However, the drawings are schematic.

### Embodiment

### Bid Assistance System

A bid assistance system (an example of a transaction assistance system) according to the embodiment will be described below.

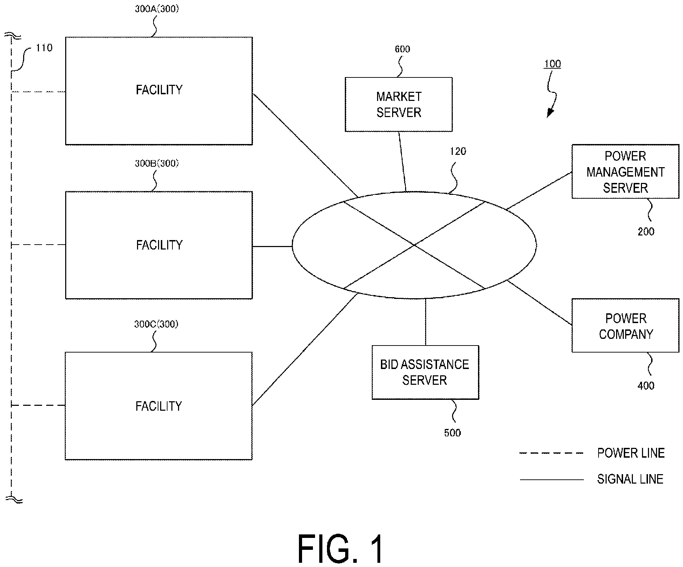

As illustrated in FIG. 1, a bid assistance system 100 includes a power management server 200, a facility 300, a power company 400, a bid assistance server 500, and a market server 600. In FIG. 1, facilities 300Ato 300C are illustrated as examples of the facility 300.

Each facility 300 is connected to a power grid 110. In the following description, the flow of power from the power grid 110 to the facility 300 is referred to as a power flow, and the flow of power from the facility 300 to the power grid 110 is referred to as a reverse power flow.

The power management server 200, the facility 300, the power company 400, the bid assistance server 500, and the market server 600 are connected to a network 120. The network 120 may provide lines between these entities. For example, the network 120 is the Internet. The network 120 may include a dedicated line such as a virtual private network (VPN).

The power management server 200 is an example of a management server belonging to a management entity managing two or more facilities. The power management server 200 is a server managed by a business operator, such as a power generation operator, a power transmission and distribution operator, a retailer, or a resource aggregator. The resource aggregator is an electric power provider that provides the reverse power flow to the power generation operator, the power transmission/distribution operator, the retailer, or the like in a virtual power plant (VPP). The resource aggregator may be an electric power provider that produces a reduced power of the power flow (consumed power) of the facility 300 managed by the resource aggregator. In the present embodiment, the business operator managing the power management server 200 is an example of an entity that purchases the reverse power flow.

The power management server 200 transmits, to the local controller 360 provided in the facility 300, a control message instructing control of a distributed power supply (for example, a solar cell apparatus 310, a power storage apparatus 320, or a fuel cell apparatus 330) provided in the facility 300. For example, the power management server 200 may transmit a power flow control message (for example, demand response (DR)) requesting control of the power flow and may transmit a reverse power flow control message requesting control of the reverse power flow. Further, the power management server 200 may transmit a power control message for controlling an operating state of the distributed power supply. The degree of control of the power flow or the reverse power flow may be expressed by an absolute value (for example, XX kW), or may be expressed by a relative value (for example, XX%). Alternatively, the degree of control of the power flow or the reverse power flow may be expressed in two or more levels. The degree of control of the power flow or the reverse power flow may be represented by a power charge (RTP: real time pricing) determined by the current power supply and demand balance, and may be represented by a power charge (TOU: time of use) determined by the past power supply and demand balance.

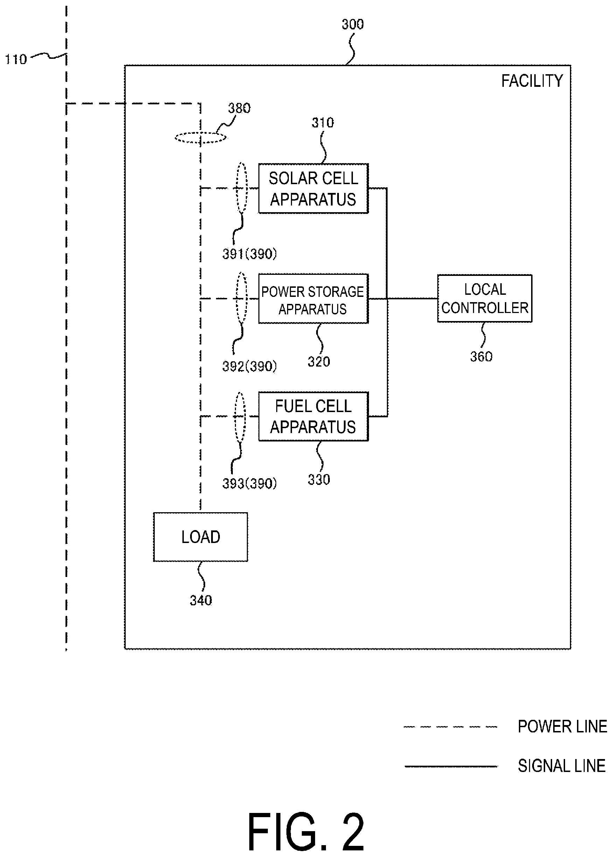

The facility 300 is an example of a facility belonging to the facility entity that is the subject adjusting power of the power grid 110. The facility 300 includes the solar cell apparatus 310, the power storage apparatus 320, the fuel cell apparatus 330, the load device 340, the local controller 360, a power meter 380, and power meters 390, as illustrated in FIG. 2.

The solar cell apparatus 310 is the distributed power supply that generates power in response to sunlight or other light. The solar cell apparatus 310 may be an example of the distributed power supply to which the feed-in tariff (FIT) is applied. For example, the solar cell apparatus 310 includes a power conditioning system (PCS) and a solar panel. The solar cell apparatus 310 may be an example of a control target equipment controllable by the management entity (power management server 200).

Here, the power output from the solar cell apparatus 310 may vary depending on the amount of received light such as sunlight. Thus, when considering power generation efficiency of the solar cell apparatus 310, the power output from the solar cell apparatus 310 is variable power that is variable according to the amount of received light of the solar panel.

The power storage apparatus 320 is the distributed power supply that charges the power and discharges the power. The power storage apparatus 320 may be an example of the distributed power supply to which the feed-in tariff is not applied. For example, the power storage apparatus 320 includes the PCS and a power storage cell. The power storage apparatus 320 may be an example of the control target equipment controllable by the management entity (power management server 200).

The fuel cell apparatus 330 is the distributed power supply that generates power using a fuel. The fuel cell apparatus 330 may be an example of the distributed power supply to which the feed-in tariff is not applied. For example, the fuel cell apparatus 330 includes the PCS and the fuel cell. The fuel cell apparatus 330 may be an example of the control target equipment controllable by the management entity (power management server 200).

For example, the fuel cell apparatus 330 may be a solid oxide fuel cell (SOFC), a polymer electrolyte fuel cell (PEFC), a phosphoric acid fuel cell (PAFC), and a molten carbonate fuel cell (MCFC).

The load device 340 is a device that consumes power. For example, the load device 304 is an air conditioning device, an illumination device, an audio visual (AV) device, or the like. The load device 340 may be an example of a non-control target equipment that is not controlled by the management entity (power management server 200).

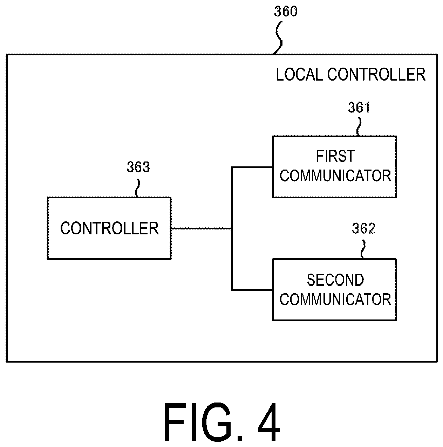

The local controller 360 is an apparatus (EMS: Energy Management System) that manages power of the facility 300. The local controller 360 may control an operating state of the solar cell apparatus 310, may control an operating state of the power storage apparatus 320 provided in the facility 300, and may control an operating state of the fuel cell apparatus 330 provided in the facility 300. The details of the local controller 360 will be described later (see FIG. 4).

In the embodiment, the local controller 360 is an example of a facility terminal transmitting, to the bid assistance server 500, bid information corresponding to a transaction target time. The bid information includes a value for a use of the control target equipment.

In the embodiment, communication between the power management server 200 and the local controller 360 is performed in accordance with a first protocol. On the other hand, communication between the local controller 360 and the distributed power supply (the solar cell apparatus 310, the power storage apparatus 320, or the fuel cell apparatus 330) is performed in accordance with a second protocol different from the first protocol. For example, as the first protocol, a protocol based on open automated demand response (ADR) or a unique dedicated protocol can be used. For example, as the second protocol, a protocol compliant with ECHONET Lite, smart energy profile (SEP) 2.0, KNX, or a unique dedicated protocol can be used. Note that the first protocol and the second protocol may be different from each other, and, for example, even if both are the unique dedicated protocols, the first protocol and the second protocol may be protocols made of different rules. However, the first protocol and the second protocol may be protocols made of the same rule.

The power meter 380 is an example of a base power meter that measures the power flow from the power grid 110 to the facility 300 and the reverse power flow from the facility 300 to the power grid 110. For example, the power meter 380 is a smart meter that belongs to the power company 400.

Here, the power meter 380 transmits, for each predetermined period (for example, 30 minutes), a message including an information element indicating an integrated value of the power flow or the reverse power flow in the predetermined period to the local controller 360. The power meter 380 may autonomously transmit the message and may transmit the message in response to a request of the local controller 360. The power meter 380 may transmit, for each predetermined period, the message including the information element indicating the power flow or the reverse power flow in the predetermined period to the power management server 200.

A power meter 390 is an example of the individual power meter that measures an individual output power of the distributed power supply. The power meter 390 may be provided at an output end of the PCS of the distributed power supply, and may be considered to be part of the distributed power supply. In FIG. 2, a power meter 391, a power meter 392, and a power meter 393 are provided as each of the power meters 390. The power meter 391 measures the individual output power of the solar cell apparatus 310. The power meter 392 measures the individual output power of the power storage apparatus 320. The power meter 393 measures the individual output power of the fuel cell apparatus 330.

Here, the power meter 390 transmits the message including an information element indicating the individual output power of the distributed power supply at an interval (for example, 1 minute) shorter than the predetermined period to the local controller 360. The individual output power of the distributed power supply may be represented in an instantaneous value and may be represented in an integrated value. The power meters 390 may autonomously transmit the message and may transmit the message in response to a request of the local controller 360.

Returning to FIG. 1, the power company 400 is an example of a verification server belonging to a verification entity verifying a result of a power transaction. The power company 400 is an entity that provides infrastructure such as the power grid 110, and is, for example, the power generation operator or the power transmission/distribution operator. The power company 400 may entrust various operations to an entity managing the power management server 200.

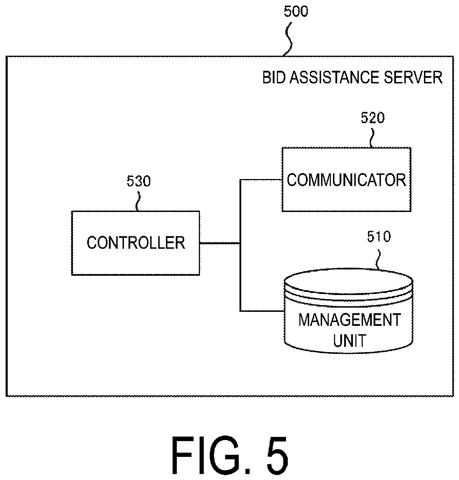

The bid assistance server 500 is a server assisting the power transaction related to the power adjustment of the power grid 110 at the transaction target time. The details of the bid assistance server 500 will be described later (see FIG. 5).

Here, the power transaction related to the power adjustment may include a transaction (power purchase and sale transaction) in which the reverse power flow output from the facility 300 to the power grid 110 is exchanged with a value. Such a power transaction may include a transaction (raise adjustment transaction) in which increased power of the reverse power flow output from the facility 300 to the power grid 110 is exchanged with the value. The power transaction related to the power adjustment may include a transaction (down adjustment transaction or output suppression transaction) in which the reduced power of the reverse power flow is exchanged with the value. The power transaction related to the power adjustment may include a transaction (hereinafter referred to as a negawatt transaction) in which the reduced power of the power flow (also referred to as a demand power) supplied from the power grid 110 to the facility 300 is exchanged with the value. The reduced power of the power flow is a power reduced from a baseline power. The baseline power is a power flow assumed when a reduction request has not been performed. The baseline power may be an average value of the power flow for a certain period before advance notice of the reduction request. The certain period may be determined according to a substance of the negawatt transaction, or may be determined between the power management server 200 and the power company 400.

In the following, the power exchanged with the value (for example, the reverse power flow, the reduced power of the reverse power flow, the reduced power of the power flow) is referred to as a transaction target power. A seller of the transaction target power is referred to as a seller entity, and a buyer of the transaction target power is referred to as a buyer entity.

The value may be a currency issued by a governing body, such as a country, or may be a virtual currency issued by a business operator. The value may be an environmental added value certified by a third party organization. The environmental added value may be certified by a green power certificate.

A market server 600 is a server managing a power transaction market. In other words, the market server is a server performing the power transaction related to the power adjustment of the power grid 110. Specifically, the market server 600 matches the seller entity with the buyer entity by comparing bid terms of the seller entity and purchase terms of the buyer entity. In other words, the market server 600 matches the seller entity presenting the bid terms that meets the purchase terms with the buyer entity. In the embodiment, the seller entity is synonymous with the management entity of the power management server 200.

Here, the bid terms and the purchase terms may include terms represented by the same index. For example, the unit of the same index may be a magnitude of the value for a unit power (value/kW). The bid terms may include a magnitude of an instantaneous value of an adjustable power in a unit time, and may include a magnitude of an integrated value of the adjustable power in the transaction target time. The adjustable power will be described in detail below.

### Power Management Server

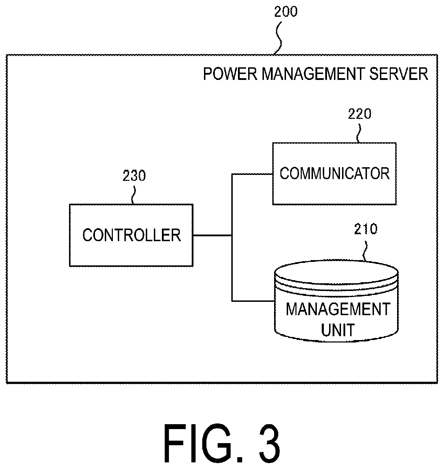

A power management server according to an embodiment will be described below. As illustrated in FIG. 3, the power management server 200 includes a management unit 210, a communicator 220, and a controller 230. The power management server 200 is an example of a virtual top node (VTN).

The management unit 210 includes a storage medium, such as a nonvolatile memory and/or an HDD, and manages information on the facilities 300. For example, information relating to the facility 300 includes a type of the distributed power supply (the solar cell apparatus 310, the power storage apparatus 320, or the fuel cell apparatus 330) provided in the facility 300, specifications of the distributed power supply (the solar cell apparatus 310, the power storage apparatus 320, or the fuel cell apparatus 330) provided in the facility 300, and the like. The specifications may include a rated generated power of the solar cell apparatus 310, a rated power of the power storage apparatus 320, and a rated power of the fuel cell apparatus 330.

The communicator 220 includes a communication module, and communicates with the local controller 360 via the network 120. The communication module may be a wireless communication module compliant with standards such as IEEE 802.11a/b/g/n, ZigBee, Wi-SUN, and LTE, or may be a wired communication module compliant with standards such as IEEE 802.3.

As described above, the communicator 220 performs communication in accordance with the first protocol. For example, the communicator 220 transmits a first message to the local controller 360 in accordance with the first protocol. The communicator 220 receives the first message response from the local controller 360 in accordance with the first protocol.

In the embodiment, the communicator 220 transmits, to the bid assistance server 500, evaluation information including an information element managed by a management unit 510 described later. The evaluation information includes at least the information element specifying the adjustable power of the facility 300. The communicator 220 transmits, to the bid assistance server 500, terms information including terms for performing bidding for the power transaction market as the management entity. The terms information may include a threshold value comparable with the index included in the bid terms and the purchase terms. In other words, the management entity performs bidding for the power transaction market based on the adjustable power of the facility 300 presenting an index higher than the threshold value. The terms information may include the magnitude of the instantaneous value of the adjustable power in the unit time, and may include the magnitude of the integrated value of the adjustable power at the transaction target time.

The controller 230 may include at least one processor. The at least one processor may be configured of a single integrated circuit (IC) or a plurality of circuits (such as integrated circuits and/or discrete circuits) connected so as to be capable of communicating with each other.

The controller 230 controls each configuration provided in the power management server 200. For example, the controller 230 instructs the local controller 360 provided in the facility 300 to control the distributed power supply (the solar cell apparatus 310, the power storage apparatus 320, or the fuel cell apparatus 330) provided in the facility 300, by transmitting a control message. As described above, the control message may be a power flow control message, may be a reverse power flow control message, or may be a power supply control message.

### Local Controller

A local controller according to an embodiment will be described below. As illustrated in FIG. 4, the local controller 360 includes a first communicator 361, a second communicator 362, and a controller 363. The local controller 360 is an example of a virtual end node (VEN).

The first communicator 361 includes a communication module, and communicates with the power management server 200 via the network 120. The communication module may be a wireless communication module compliant with standards such as IEEE 802.11a/b/g/n, ZigBee, Wi-SUN, and LTE, or may be a wired communication module compliant with standards such as IEEE 802.3.

As described above, the first communicator 361 performs communication in accordance with the first protocol. For example, the first communicator 361 receives the first message from the power management server 200 in accordance with the first protocol. The first communicator 361 transmits the first message response to the power management server 200 in accordance with the first protocol.

The second communicator 362 includes a communication module, and communicates with the distributed power supply (the solar cell apparatus 310, the power storage apparatus 320, or the fuel cell apparatus 330). The communication module may be a wireless communication module compliant with standards such as IEEE 802.11a/b/g/n, ZigBee, Wi-SUN, and LTE, or may be a wired communication module compliant with standards such as IEEE 802.3, the unique dedicated protocols or the like.

As described above, the second communicator 362 performs communication in accordance with the second protocol. For example, the second communicator 362 transmits the second message to the distributed power supply in accordance with the second protocol. The second communicator 362 receives the second message response from the distributed power supply in accordance with the second protocol.

In the embodiment, the second communicator 362 constitutes a first receiver that receives at least information specifying the reverse power flow from the power meter 380. The second communicator 362 may receive information specifying the power flow from the power meter 380. The second communicator 362 constitutes a second receiver that receives information specifying each of the individual output powers of the two or more distributed power supplies from each of the power meters 390.

The controller 363 may include at least one processor. The at least one processor may be configured of a single integrated circuit (IC) or a plurality of circuits (such as integrated circuits and/or discrete circuits) connected so as to be capable of communicating with each other.

The controller 363 controls each configuration provided in the local controller 360. Specifically, in order to control the power of the facility 300, the controller 363 instructs the device to set an operating state of the distributed power supply by transmitting the second message and receiving the second message response. In order to control the power of the facility 300, the controller 363 may instruct the distributed power supply to report information of the distributed power supply by transmitting the second message and receiving the second message response.

### Bid Assistance Server

The bid assistance server according to the embodiment will be described below. As illustrated in FIG. 5, the bid assistance server 500 includes the management unit 510, a communicator 520, and a controller 530.

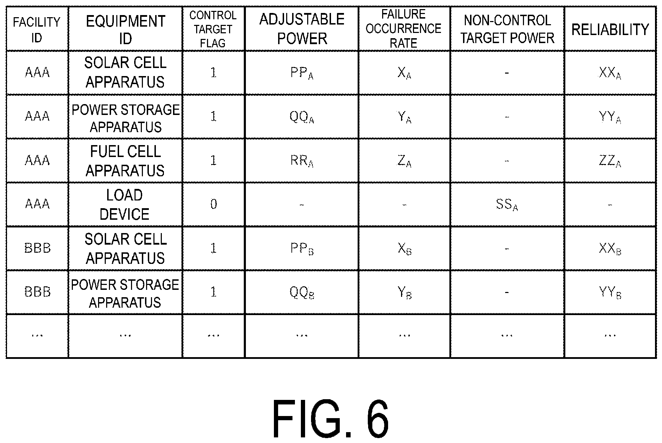

The management unit 510 includes a storage medium, such as a nonvolatile memory and/or an HDD, and manages information on the equipment provided in the facility 300. For example, the management unit 510 manages information illustrated in FIG. 6.

A "facility ID" is information specifying the facility 300. An "equipment ID" is information specifying the equipment provided in the facility 300.

A "control target flag" is a flag indicating whether the equipment provided in the facility 300 is the control target equipment. In the example illustrated in FIG. 6, "1" indicates that the equipment is the control target equipment, and "0" indicates that the equipment is non-control target equipment.

The "adjustable power" is a power of the power grid 110 that is adjustable by controlling the control target equipment at the transaction target time. The adjustable power may be the instantaneous value of the adjustable power in the unit time, and may be the integrated value of the adjustable power at the transaction target time. The adjustable power may be estimated by the rated generated power of the solar cell apparatus 310, may be estimated by the rated power of the power storage apparatus 320, and may be estimated by the rated power of the fuel cell apparatus 330. Alternatively, the adjustable power may be estimated by a predicted output power of the solar cell apparatus 310, which is predicted by the weather forecast or the like at the transaction target time. The adjustable power may be estimated by a predicted power storage remaining amount of the power storage apparatus 320 at the transaction target time. The adjustable power may be estimated by a predicted output power of the fuel cell apparatus 330 at the transaction target time.

The adjustable power of the power grid 110 contributes to the above-described transaction target power. It should be noted; however, that the adjustable power of the power grid 110 may be influenced by the non-control target power described below.

A "failure occurrence rate" is a failure occurrence rate related to the control target equipment. The failure occurrence rate may be an occurrence rate of a failure of the control target equipment, or may be an occurrence rate of a failure of communication between the control target equipment and the power management server 200. The failure occurrence rate may include an occurrence rate of a failure of communication between the control target equipment and the local controller 360, or may include an occurrence rate of a failure of communication between the local controller 360 and the power management server 200.

The "non-control target power" is a power of the non-control target equipment at the transaction target time. In a case where the non-control target equipment is the load device 340, the non-control target power may include a consumed power of the load device 340. In a case where the non-control target equipment is the distributed power supply, the non-control target power may include the output power of the distributed power supply. In a case where the non-control target equipment is the power storage apparatus 320, the non-control target power amount may include a discharging power of the power storage apparatus 320, or may include a charging power of the power storage apparatus 320. The non-control target power may be estimated based on the history of the power of the non-control target equipment.

"Reliability" is reliability in which an adjustment corresponding to the adjustable power is performed in the power transaction related to the power adjustment of the power grid 110. In other words, the reliability is a possibility in which the bid terms will be complied with. For example, the reliability may be estimated based on a degree of deviation of "the adjustable power realized by the control of the control target equipment" from "the adjustable power included in the bid terms".

The reliability may be estimated based on the above-described failure occurrence rate. For example, the reliability is set to be lower as the failure occurrence rate is higher. Alternatively, the reliability may be estimated based on the adjustable power and the non-control target power described above. For example, the reliability is set to be lower as a ratio of the non-control target power to the adjustable power is higher.

In FIG. 6, the adjustable power, the failure occurrence rate, and the reliability are managed for each control target equipment, but the embodiment is not limited to this. The adjustable power, the failure occurrence rate, and the reliability may be managed for each facility 300. In such a case, the adjustable power may be a sum of the adjustable powers of each of control target equipments. For example, in the facility 300 whose facility ID is "AAA", the adjustable power may be a sum of PP_{A}, QQ_{A}, and RR_{A}. The failure occurrence rate may be a simple average of the failure occurrence rates of each of control target equipments, or may be a weighted average of the failure occurrence rates of each of control target equipments. For example, in the facility 300 whose facility ID is "AAA", the failure occurrence rate is the simple average or the weighted average of X_{A}, Y_{A}, and Z_{A}. Similarly, the reliability may be the simple average of the reliabilities of each control target equipments, or may be the weighted average of the reliabilities of each control target equipments. For example, in the facility 300 whose facility ID is "AAA", the reliability is the simple average or the weighted average of XX_{A}, YY_{A}, and ZZ_{A}. The weighted average may be performed such that a weight of the control target equipment having a large adjustable power is increased.

The communicator 520 includes a communication module, and communicates with the local controller 360 via the network 120. The communication module may be a wireless communication module compliant with standards such as IEEE 802.11a/b/g/n, ZigBee, Wi-SUN, and LTE, or may be a wired communication module compliant with standards such as IEEE 802.3.

The communicator 520 may receive, from the power management server 200, the evaluation information including the information element managed by the management unit 510. The communicator 520 may receive, from the local controller 360 of each facility 300, the evaluation information. The evaluation information may include all of the information elements illustrated in FIG. 6, or may include a portion of the information elements illustrated in FIG. 6.

In the embodiment, the communicator 520 constitutes a receiver receiving, from the facility 300, the bid information corresponding to the transaction target time. As described above, the bid information includes the value for the use of the control target equipment. For example, the value for the use of the control target equipment may be set by the facility entity (for example, a user of the facility 300).

The communicator 520 receives, from the power management server 200, the evaluation information including the information element managed by the management unit 510. The evaluation information includes at least the information element specifying the adjustable power of the facility 300. The evaluation information may include one or more information elements selected from the facility ID, the equipment ID, the control target flag, the failure occurrence rate, the non-control target power, and the reliability.

The communicator 520 receives, from the power management server 200, the terms information including the terms for performing the bidding for the power transaction market as the management entity. The terms information may include a threshold value comparable with the index included in the bid terms and the purchase terms. As described above, the terms information may include the magnitude of the instantaneous value of the adjustable power in the unit time, and may include the magnitude of the integrated value of the adjustable power at the transaction target time.

In the embodiment, the communicator 520 constitutes a transmitter transmitting, to the power management server 200, bid facility information specifying a candidate for the bid facility for the power transaction market. The communicator 520 constitutes a receiver receiving, from the power management server 200, successful bid facility information (an example of a transaction established facility information) specifying a successful bid facility (an example of a transaction established facility) in which the power transaction is established in the power transaction market.

The communicator 520 transmits, to the power company 400, the successful bid facility information specifying the successful bid facility. The communicator 520 may transmit the successful bid facility information in response to a request of the power company 400. The communicator 520 may autonomously transmit the successful bid facility information without the request of the power company 400. The communicator 520 may transmit the successful bid facility information before start of a transaction start period.

The controller 530 may include at least one processor. The at least one processor may be configured of a single integrated circuit (IC) or a plurality of circuits (such as integrated circuits and/or discrete circuits) connected so as to be capable of communicating with each other.

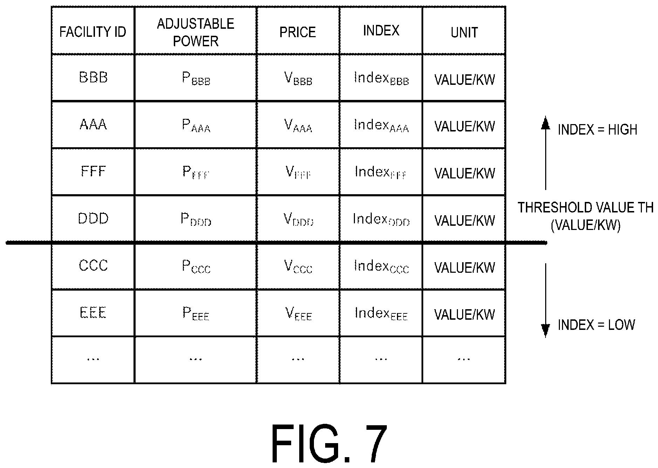

In the embodiment, the controller 530 determines a candidate for the bid facility for the power transaction market from among two or more facilities 300 based on the bid information and the adjustable power. Specifically, the controller 530 specifies a value per unit of the adjustable power (for example, an index described below = value/kW) based on the bid information and the adjustable power, and determines the candidate for the bid facility based on the specified value. Referring now to FIG. 7, a method of determining the candidate for the bid facility is described. In FIG. 7, a case is illustrated in which the adjustable power is managed for each facility 300. In FIG. 7, a case is illustrated in which the adjustable power amount is the instantaneous value of the power in the unit time.

A case is illustrated as in FIG. 7, in which the adjustable power managed for the facility 300 whose facility ID is "AAA" is "P_{AAA}", and the value included in the bid information received from the facility 300 whose facility ID is "AAA" is "V_{AAA}". Note that the same applies to the adjustable power and the value corresponding to each of the facilities 300 whose facility IDs are "BBB" to "FFF".

First, the controller 530 calculates the index based on the adjustable power and the value. The index is an index comparable with the threshold value included in the terms information described above. In other words, the index is expressed in value/kW. For example, the controller 530 calculates an index Index_{AAA} (in other words, V_{AAA}/P_{AAA}) for the facility 300 whose facility ID is "AAA". Similarly, the index is also calculated for the facilities 300 whose facility IDs are "BBB" to "FFF".

Second, the controller 530 rearranges the facilities 300 in a descending order of the index. FIG. 7 illustrates a case in which a relationship of Index_{BBB} > Index_{AAA} > Index_{FFF} > Index_{DDD} > Index_{CCC} > Index_{EEE} is satisfied. In such a case, it should be noted that the relationship of V_{BBB} > V_{AAA} > V_{FFF} > V_{DDD} > Vccc > V_{EEE} is not necessarily established.

Third, the controller 530 determines the facility 300 including the index higher than a threshold value TH included in the terms information received from the power management server 200, as the candidate for the bid facility. In FIG. 7, facilities whose facility IDs are "BBB", "AAA", "FFT" and "DDD" are determined as the candidates for the bid facilities.

Here, in a case where the management unit 510 manages the reliability, the controller 530 may determine the candidate for the bid facility based on the reliability in addition to the bid information and the adjustable power. Specifically, the controller 530 calculates the index by correcting "value/adjustable power" based on the reliability. The "value/adjustable power" is corrected to be higher as the reliability is higher (hereinafter, a first correction method).

Alternatively, in a case where the management unit 510 manages the failure occurrence rate, the controller 530 may determine the candidate for the bid facility based on the failure occurrence rate in addition to the bid information and the adjustable power. Specifically, the controller 530 calculates the index by correcting the "value/adjustable power" based on the failure occurrence rate. The lower the failure occurrence rate, the higher "value/adjustable power" is corrected (hereinafter, a second correction method).

Alternatively, in a case where the management unit 510 manages the non-control target power, the controller 530 may determine the candidate for the bid facility based on the non-control target power in addition to the bid information and the adjustable power. Specifically, the controller 530 calculates the index by correcting the "value/adjustable power" based on "the ratio of the non-control target power to the adjustable power". The lower the ratio of the non-control target power to the adjustable power, the higher "value/adjustable power" is corrected (hereinafter, a third correction method).

The controller 530 may calculate the index by two or more correction methods selected from among the first correction method to the third correction method described above.

Further, in a case where the terms information includes the magnitude of the instantaneous value of the adjustable power in the unit time, the controller 530 may determine the facilities 300 selected in the descending order of the index as the candidates for the bid facilities, until the amount of the adjustable power (instantaneous value) of the facilities 300 reaches a magnitude included in the terms information. Similarly, in a case where the terms information includes the magnitude of the integrated value of the adjustable power at the transaction target time, the controller 530 may determine the facilities 300 selected in the descending order of the index as the candidates for the bid facilities, until the amount of the adjustable power (integrated value) of the facilities 300 reaches a magnitude included in the terms information.

### Bid Assistance Method

The bid assistance method according to the embodiment will be described below.

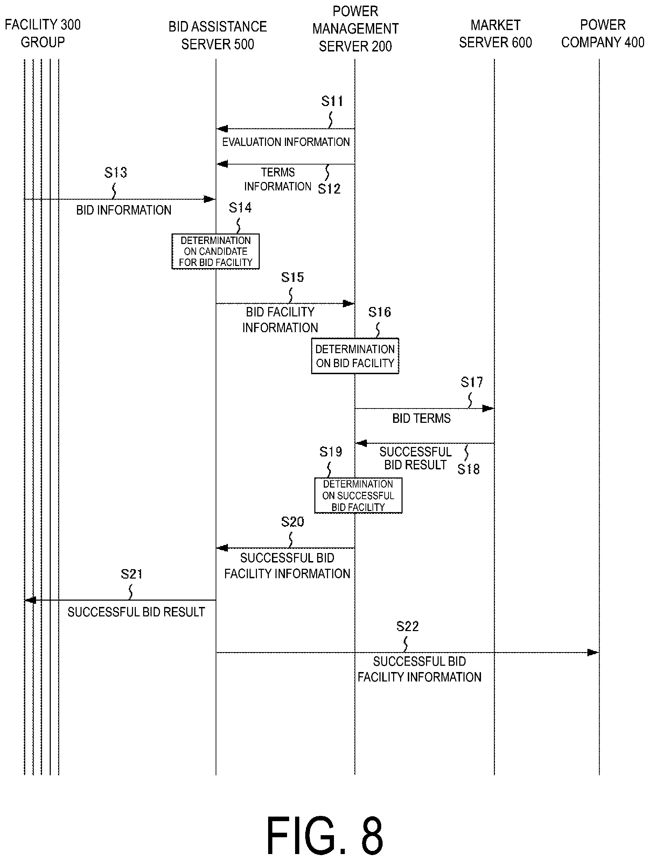

As illustrated in FIG. 8, in step S11, the bid assistance server 500 receives, from the power management server 200, the evaluation information. The evaluation information includes at least an information element specifying the adjustable power for each facility 300.

In step S12, the bid assistance server 500 receives, from the power management server 200, the terms information. The terms information terms information may include the threshold value comparable with the index included in the bid terms and the purchase terms.

In step S13, the bid assistance server 500 receives, from the facility 300 group, the bid information. The bid information includes the value for the use of the control target equipment.

In step S14, the bid assistance server 500 determines the candidate for the bid facility for the power transaction market from among the two or more facilities 300 based on the bid information and the adjustable power.

In step S15, the bid assistance server 500 transmits, to the power management server 200, the bid facility information specifying the candidate for the bid facility for the power transaction market.

In step S16, the power management server 200 determines the bid facility for the power transaction market from among the candidates for the bid facility. However, since the bidding for the power transaction market is performed as the management entity, the bid facility may not be determined at the stage of step S16.

In step S17, the power management server 200 (management entity) transmits, to the market server 600, the bid terms for the power transaction market. For example, the bid terms include the index represented in the magnitude of the value for the unit power (value/kW). The index included in the bid terms may be the threshold value described above, and may be set based on the bid facility information received in step S15. The bid terms may include a magnitude of an instantaneous value of an adjustable power in a unit time, and may include a magnitude of an integrated value of the adjustable power in the transaction target time. Such information may be set based on the bid facility information received in step S15.

In step S18, the power management server 200 (management entity) receives, from the market server 600, the successful bid result in the power transaction market. The successful bid result includes information indicating whether the bid terms transmitted in step S17 has been accepted in the power transaction market. Here,
in step S19, the power management server 200 determines the successful bid facility based on the successful bid result in step S18. The successful bid facility is the facility 300 participating in the power transaction at the transaction target time.

In step S20, the bid assistance server 500 receives, from the power management server 200, the successful bid facility information specifying the successful bid facility in which the power transaction is established in the power transaction market.

In step S21, the bid assistance server 500 transmits, to the facility 300 group, the successful bid result. For example, the bid assistance server 500 transmits, to the facility 300 determined as the successful bid facility, the successful bid result indicating that the facility 300 is the successful bid facility. The bid assistance server 500 may transmit, to the facility 300 not determined as the successful bid facility, the successful bid result indicating that the facility 300 is not the successful bid facility. The bid assistance server 500 may transmit the successful bid result in response to the request of the facility 300 group, or may autonomously transmit the successful bid result without the request for the facility 300 group.

In step S22, the bid assistance server 500 transmits, to the power company 400, the successful bid facility information specifying the successful bid facility in which the power transaction is established in the power transaction market. The bid assistance server 500 may transmit the successful bid facility information in response to the request of the power company 400. The bid assistance server 500 may autonomously transmit the successful bid facility information without the request of the power company 400. The bid assistance server 500 may transmit the successful bid facility information before the start of the transaction start period.

Note that in a case where the power transaction is not established in the power transaction market, the bid terms illustrated in step S17 may be presented over a plurality of times.

### Actions and Effects

In the embodiment, the bid assistance server 500 determines the candidate for the bid facility for the power transaction market based on the bid information and the adjustable power. According to such a configuration, since the control target equipment is controlled by the power management server 200, in a case where the facility entity cannot recognize the adjustable power, the candidate for the bid facility appropriate for the power management server 200 can be determined only by presenting the value (price) for the use of the control target equipment controllable by the power management server 200.

In the embodiment, the bid assistance server 500 transmits, to the power company 400, the successful bid facility information specifying the successful bid facility in which the power transaction is established in the power transaction market. According to such a configuration, in a case where the bidding for the power transaction market is performed for each power management server 200, the verification entity (here, the power company 400) verifying the power transaction can recognize the facility 300 (successful bid facility) notified from the power management server 200 to the verification entity as the facility entity that is the subject adjusting the power of the power grid 110, that is, the facility 300 participating in the power transaction under the control of the power management server 200. In turn, the result of the power transaction can be appropriately verified.

In the embodiment, a flexible change is allowable in the population of the facilities 300 participating in the power transaction at the transaction target time, by providing a mechanism for the verification entity to properly verify the result of the power transaction.

### Other Embodiments

Although the present disclosure has been described by the above-described embodiment, it should be understood that the description and the drawings which form a part of this disclosure do not limit this disclosure. Various alternative embodiments, examples, and operational techniques will be apparent from this disclosure to those skilled in the art.

In the embodiment, the case has been exemplified in which the power transaction facility performing the transaction in the predetermined transaction market is the bid facility for the power transaction market. However, the embodiment is not limited to this example. The transaction facility may be a facility performing any transaction in the power transaction market. For example, the transaction facility may be a facility (buyer entity) purchasing the power in the power transaction market. In such a case, "bid" and "successful bid" may be replaced with "transaction".

In the embodiment, the case has been exemplified in which the predetermined transaction is the power transaction related to the power adjustment of the power grid. However, the embodiment is not limited to this example. The predetermined transaction may be the transaction in which the verification entity needs to verify the transaction facility. In such a case, "power transaction" and "power transaction market" may be replaced with "predetermined transaction" and "predetermined transaction market".

In the embodiment, the case has been exemplified in which the control target equipment is all of the distributed power supplies provided in the facility 300. However, the embodiment is not limited to this example. For example, the control target equipment may be a part of the distributed power supplies provided in the facility 300. The control target equipment may be the distributed power supply allowed to output the power from the facility 300 to the power grid 110. The distributed power supply allowed to output the power from the facility 300 to the power grid 110 may include the power storage apparatus 320.

In the embodiment, the case has been exemplified in which the control target equipment is the distributed power supply provided in the facility 300. However, the embodiment is not limited to this example. For example, the control target equipment may include the load device 340 provided in the facility 300. In a case where the load device 340 is the control target equipment, the power flow can be reduced in the negawatt transaction.

In the embodiment, the case has been illustrated in which the bid assistance server 500 is provided separately from the power management server 200. However, the embodiment is not limited to this example. A function included in the bid assistance server 500 may be included in the power management server 200. In other words, the power management server 200 may include the management unit 510 and the controller 530 of the bid assistance server 500. In such a case, the communication between the power management server 200 and the bid assistance server 500 may be omitted.

In the embodiment, the case has been illustrated in which a terminal apparatus transmitting the bid information is the local controller 360. However, the embodiment is not limited to this example. The terminal apparatus may be a terminal belonging to the facility entity. For example, the terminal apparatus may be a smartphone, a tablet terminal, a personal computer, or the like included in the facility entity.

Although not specifically mentioned in the embodiment, it may be validated that the successful bid facility included in the successful bid facility information transmitted from the bid assistance server 500 to the power company 400 matches the facility 300 participating in the power transaction at the transaction target time. For example, a validation method may be a method of validating that there is no falsification between the successful bid facility information transmitted from the power management server 200 to the bid assistance server 500 and the successful bid facility information transmitted from the bid assistance server 500 to the power company 400 by using a block chain technology.

In the embodiment, the determination (step S19 illustrated in FIG. 8) on the facility 300 (successful bid facility) participating in the power transaction at the transaction target time is performed before the start of the transaction target time. For example, in a case where the transaction target time is from 12:00 to 15:00, the determination on the successful bid facility in the bid assistance server 500 and the transmission of the successful bid facility information to the power company 400 are performed before the start of the transaction target time (from 12:00 to 15:00). Further, the successful bid facility may be redetermined (updated) after the start of the transaction target time. In such a case, the transaction target time related to the successful bid facility after the redetermination (update) may also be updated. For example, the transaction target time related to the successful bid facility after the redetermination (update) may be from 13:00 to 15:00. Even in this case, the redetermination (update) on the successful bid facility in the bid assistance server 500 and the transmission of the successful bid facility information to the power company 400 are performed before the start of the transaction target time (from 13:00 to 15:00) after the update. According to such a configuration, even in a case where the redetermination (update) on the successful bid facility is performed, the power company 400 (verification entity) can verify the successful bid facility participating in the power transaction.

In the embodiment, the solar cell apparatus 310 has been exemplified as the distributed power supply that outputs power by utilizing natural energy. However, the embodiment is not limited to this example. The distributed power supply that outputs power by utilizing natural energy may include one or more adjustment power supplies selected from a wind power generation apparatus, a water power generation apparatus, a geothermal power generation apparatus, and the biomass power generation apparatus. Such a distributed power supply may be considered to be an example of a distributed power supply allowed to output the power from the facility 300 to the power grid 110.

In the embodiment, the case has been exemplified in which each adjustment power supply includes an individual PCS. However, the embodiment is not limited to this example. One multi-DC link PCS may be provided for the two or more adjustment power supplies.

In an embodiment, the case has been exemplified in which the local controller 360 is provided in the facility 300. However, the embodiment is not limited to this example. The local controller 360 may be provided by a cloud service.

Although not specifically mentioned in the embodiment, the electric power may be an instantaneous value (kW) or an integrated value per unit time (kWh).

Note that the contents of JP No. 2019-194579 (filed on October 25, 2019) are incorporated herein by reference in its entirety.

## Claims

1. A transaction assistance system configured to assist a predetermined transaction at a transaction target time, the transaction assistance system comprising:
a controller configured to determine, from among two or more facilities, a candidate for a transaction facility performing a transaction in a predetermined transaction market;
a transmitter configured to transmit, to a management server belonging to a management entity configured to manage the two or more facilities, transaction facility information specifying the candidate for the transaction facility; and
a receiver configured to receive, from the management server, transaction established facility information specifying a transaction established facility in which the predetermined transaction is established in the predetermined transaction market, wherein
the transmitter transmits, to a verification server belonging to a verification entity configured to verify a result of the predetermined transaction, transaction established facility information specifying the transaction established facility.

2. The transaction assistance system according to claim 1, wherein
the transmitter transmits the transaction established facility information in response to a request of the verification server.

3. The transaction assistance system according to claim 1, wherein
the transmitter autonomously transmits the transaction established facility information without a request of the verification server.

4. The transaction assistance system according to any one of claims 1 to 3, wherein
the transmitter transmits the transaction established facility information before a start of the transaction target time.

5. The transaction assistance system according to any one of claims 1 to 4, wherein
the predetermined transaction is a power transaction related to a power adjustment of a power grid,
the two or more facilities comprise at least a control target equipment controllable by the management entity,
each of the two or more facilities comprises a management unit configured to manage an adjustable power corresponding to the transaction target time,
the receiver receives, from the two or more facility terminals, bid information corresponding to the transaction target time,
the bid information comprises a value for a use of the control target equipment,
the adjustable power is a power of the power grid that is adjustable by controlling the control target equipment, and
the controller determines a candidate for a bid facility as the candidate for the transaction facility based on the bid information and the adjustable power.

6. The transaction assistance system according to claim 5, wherein
the control target equipment comprises at least a distributed power supply.

7. The transaction assistance system according to claim 6, wherein
the distributed power supply comprises a distributed power supply allowed to output a power from the facility to the power grid.

8. The transaction assistance system according to any one of claims 5 to 7, wherein
the management unit manages reliability in which an adjustment corresponding to the adjustable power is performed, and
the controller determines the candidate for the bid facility based on the reliability in addition to the bid information and the adjustable power.

9. The transaction assistance system according to any one of claims 5 to 8, wherein
the management unit manages a failure occurrence rate related to the control target equipment, and
the controller determines the candidate for the bid facility based on the failure occurrence rate in addition to the bid information and the adjustable power.

10. The transaction assistance system according to any one of claims 5 to 9, wherein
each of the two or more facilities comprises a non-control target equipment that is not controlled by the management entity,
the management unit manages the non-control target power that is a power of the non-control target equipment at the transaction target time, and
the controller determines the candidate for the bid facility based on the non-control target power in addition to the bid information and the adjustable power.

11. The transaction assistance system according to any one of claims 5 to 10, wherein
the receiver receives, from a power management server belonging to the management entity, evaluation information comprising an information element managed by the management unit.

12. A transaction assistance method of assisting a predetermined transaction at a transaction target time, the transaction assistance method comprising:
determining, from among two or more facilities, a candidate for a transaction facility performing a transaction in a predetermined transaction market;
transmitting, to a management server belonging to a management entity configured to manage the two or more facilities, transaction facility information specifying the candidate for the transaction facility;
receiving, from the management server, transaction established facility information specifying a transaction established facility in which the predetermined transaction is established in the predetermined transaction market; and
transmitting, to a verification server belonging to a verification entity configured to verify a result of the predetermined transaction, the transaction established facility information specifying the transaction established facility.
